# EUROPEAN PATENT APPLICATION

(11) **EP 3 998 212 A1**
(43) Date of publication of application: **18.05.2022**
(21) Application number: 21158147.5
(22) Date of filing: 19.02.2021
(51) Int. Cl.: B64D 15/12, B64D 15/14

(54) **AN AIRCRAFT WITH AN ICE PROTECTION SYSTEM AND A METHOD OF DE-ICING AN AIRCRAFT WITH AN ICE PROTECTION SYSTEM**

(71) Applicant: Lilium eAircraft GmbH, 82234 Wessling (DE)
(72) Inventor: Zaid, Ayaz Janjua, 82205 Gilching (DE); Andreas, Moebius, 82234 Wessling (DE)
(74) Representative: Grünecker Patent- und Rechtsanwälte PartG mbB

(57) **Abstract**

An aircraft (1) comprising at least one airfoil and at least one engine (5) arranged on the trailing edge (12) of the airfoil, the engine (5) comprising an engine housing (6) and an engine inlet (7), an ice protection system (9) provided on at least one region of the airfoil and/or the engine housing (6) which is/are arranged upstream of the engine inlet (7), the ice protection system (9) comprises an ice shedding device adapted for shedding ice formations formed on the airfoil and/or the engine housing (6) into ice pieces and the ice shedding device is adapted to control the size of the shed ice pieces to stay below a predetermined maximum size. Method of removing ice formations from an airfoil of an aircraft wherein at least one engine is arranged on the trailing edge of the airfoil, comprising the following steps: removing the ice formations on the airfoil from the airfoil by breaking the ice formations into pieces using an ice protection system and controlling the size of the removed ice pieces to stay below a predetermined maximum value by the ice protection system.

## Description

### FIELD OF THE INVENTION

The present patent application refers to an ice protection system for an aircraft comprising at least one airfoil and at least one engine arranged on the trailing edge of the airfoil, the engine comprising an engine housing and an engine inlet; and to a method of removing ice formations from an airfoil of an aircraft wherein at least one engine is arranged on the trailing edge of the airfoil.

### BACKGROUND OF THE INVENTION

In order to be certified for operation in Flight into known icing conditions (FIKI), an aircraft has to be equipped with suitable ice protection systems (IPS). Ice protection systems are designed to keep atmospheric ice from accumulating on aircraft surfaces, particularly leading edges thereof, such as wings, propellers, rotor blades, engine intakes, and environmental control intakes. If ice is allowed to build up to a significant thickness, it can change the shape of airfoils and flight control surfaces, degrading the performance, control or handling characteristics of the aircraft. An ice protection system either prevents formation of ice, or enables the aircraft to shed the ice before it can grow to a dangerous thickness.

US 7,246,773 B2 discloses an electro-thermal ice protection system comprising a metal foil heater with an integral parting strip. The metal foil heater is configured to cover at least a portion of the leading edge of the airfoil and the integral parting strip is disposed along an air-stagnation zone of the leading edge. A controller is electrically coupled to the metal foil heater for controlling electrical energy from a power source to the metal foil of the heater in accordance with a pulse duty cycle and for controlling power to the parting strip of the heater to maintain the air-stagnation zone virtually free of ice formation.

CA 2 615 166 C shows an ice protection system combining electro-thermal and mechanical de-icing. The ice protection system comprises an intermittently heated electric heater to reduce the strength of the bond between the ice and the airfoil and actuators which lead to a deformation of the skin of the airfoil to shed the ice formed on the airfoil.

US 2013/0228653 A1 describes a hybrid ice protection system for an engine nacelle inlet lip including an electro-expulsive de-icing system and electrothermal heaters to first break ice away from an outer surface of the engine nacelle inlet lip and then melt remaining residual ice from the outer surface of the inlet lip.

US 2018/0370637 A1 discloses an electro-thermal ice protection article including a thermally stable thermoplastic sheet containing a carbon allotrope additive.

US 9,227,732 B2 shows an electro-thermal ice protection system including a controller for managing and controlling electrical power generated to heat and de-ice surfaces such as aircraft wings.

EP 2 808 258 B1 describes a pulsed electro-thermal ice protection system with coated heating substrates.

US 8,366,047 B2 discloses a modular fan inlet ice protection system.

CA 2 778 024 C shows an electro-thermal wing ice protection solution controller for managing and controlling electrical power generated to heat and de-ice the wings of an aircraft.

GB 2477338 A and US 10,252,806 B2 disclose an electro-thermal heater for an ice protection system for an aircraft.

When the ice formations are shed from the airfoil by an ice protection system in a de-icing process, the ice formations are broken into large chunks or layers and these large chunks or layers are shed from the airfoil. The large ice chunks or ice layers might cause damage when ingested into the engine and are a safety hazard.

### SUMMARY OF THE INVENTION

In accordance with one aspect of the invention, an aircraft comprising at least one airfoil and at least one engine arranged on the trailing edge of the airfoil, the engine comprising an engine housing and an engine inlet, is provided with an ice protection system on at least one region of the airfoil and/or the engine housing which is/are arranged upstream of the engine inlet, the ice protection system comprises a ice shedding device adapted for shedding ice formation formed on the airfoil and/or the engine housing into ice pieces and the ice shedding device is adapted to control the size of the shed ice pieces to stay below a predetermined maximum size. This ensures that the shed ice pieces do not cause damage to the engine at the trailing edge.

In accordance with another aspect of the present invention an aircraft comprises at least one airfoil, at least one engine arranged on the trailing edge of the airfoil, and an ice protection system provided on at least one region of the airfoil and/or the engine housing arranged upstream of the engine inlet, the ice protection system is adapted to control the size of the shed ice pieces in a spanwise direction, in a chordwise direction and in a thickness direction. This allows the sizes of ice being shed to be exactly controlled and leads to the best overall trade-off between engine robustness sizing, power consumption and degraded performance of the aircraft.

In accordance with yet another aspect of the present invention an aircraft comprises at least one airfoil, at least one engine arranged on the trailing edge of the airfoil, and an ice protection system provided on at least one region of the airfoil and/or the engine housing arranged upstream of the engine inlet, the ice shedding device of the ice protection system comprises at least two heating strips extending in the spanwise direction of the airfoil, wherein at least one of the heating strips is a permanently heated parting strip that is arranged at a stagnation point of the airfoil leading edge, and wherein at least one other of the heating strips is a de-icing strip that is arranged adjacent to the parting strip in a chordwise direction of the airfoil and that is divided into de-icing segments along the spanwise direction of the airfoil, and wherein the de-icing segments of the de-icing strip are adapted to be sequentially heated in a heating cycle. The permanently heated parting strip keeps the region around the stagnation zone free of ice. Therefore, ice formations surrounding the leading edge of the airfoil and extending on the upper and lower side of the airfoil, which are more difficult to shed off, are avoided. Ice formations on the upper and lower side of the airfoil, are sequentially removed with the de-icing strips. The segments of the de-icing strips are intermittently heated to melt the thin layer of ice at the substrate bond interface. The aerodynamic forces consequently remove the ice formations. This leads to a reduction of the energy consumption of the anti-icing system. The airfoil can for example be a wing or a canard. Preferably, each de-icing segment of the at least one de-icing strip is an individual, short de-icing strip in itself. In this case, a plurality of short de-icing strips is arranged one after the other along the leading edge of the airfoil. This allows simple control of how and when to heat an individual de-icing segment.

In accordance with yet another aspect of the present invention an aircraft comprises at least one airfoil, at least one engine arranged on the trailing edge of the airfoil, and an ice protection system provided on at least one region of the airfoil and/or the engine housing arranged upstream of the engine inlet, the ice protection system comprising at least one de-icing strip arranged on the leading edge of the airfoil that is divided into de-icing segments along the spanwise direction of the airfoil, the segments of the at least one de-icing strip are adapted to be heated in a predetermined sequence. As mentioned before, the de-icing strip is comprised of a plurality of de-icing segments, which are arranged one after the other along a leading edge of the airfoil in the spanwise direction. Preferably, each de-icing segment can be a separate, short de-icing strip and can be heated individually. Due to this arrangement, the energy consumption of the ice protection system can be reduced; nevertheless the ice formations are removed before the thickness of the ice formations exceeds a critical value.

In accordance with yet another aspect of the present invention an aircraft comprises at least one airfoil, at least one engine arranged on the trailing edge of the airfoil, and an ice protection system provided on at least one region of the airfoil and/or the engine housing arranged upstream of the engine inlet, the ice protection system comprising at least one parting strip and at least one de-icing strip and the power density of the at least one de-icing strip is higher than the power density of the at least one parting strip. Due to the higher power density of the de-icing strip, more rapid ice melting capability is provided in the de-iced regions.

In accordance with yet another aspect of the present invention an aircraft comprises at least one airfoil, at least one engine arranged on the trailing edge of the airfoil, and an ice protection system provided on at least one region of the airfoil and/or the engine housing arranged upstream of the engine inlet, the ice protection system comprising at least three heating strips least, at least two of the heating strips are de-icing strips and one de-icing strip is arranged adjacent to each side of the parting strip in the streamwise direction. Due to this arrangement satisfactorily de-icing on the leading edge of the airfoil is achieved.

In accordance with yet another aspect of the present invention an aircraft comprises at least one airfoil, at least one engine arranged on the trailing edge of the airfoil, and an ice protection system provided on at least one region of the airfoil and/or the engine housing arranged upstream of the engine inlet, the ice protection system comprising at least four heating strips extending in the spanwise direction of the airfoil and arranged adjacent to each other in the chordwise direction of the airfoil and at least on one side of the parting strip more than one de-icing strip is arranged adjacent to the parting strip in the chordwise direction of the airfoil. This arrangement accounts for runback icing after the removal of ice from the preceding de-icing strip.

In accordance with yet another aspect of the present invention the aircraft is an electric vertical take-off and landing aircraft (eVTOL) and comprises at least one airfoil, at least one engine arranged on the trailing edge of the airfoil, and an ice protection system provided on at least one region of the airfoil and/or the engine housing arranged upstream of the engine inlet. This this arrangement allows safe flight of the eVTOL into known icing conditions.

In accordance with yet another aspect of the present invention, the aircraft comprises two airfoils in the form of a pair of wings, at least one engine is arranged on the trailing edge of each wing, the ice protection system is provided on a leading edge of each wing and on the leading edge of the engine housing of each engine, and the engine is movable relative to the wing. In accordance with yet another aspect of the present invention, the aircraft comprises two further airfoils in the form of a pair of canards, at least one engine is arranged on the trailing edge of each canard, the ice protection system is provided on a leading edge of each canard and on the leading edge of the engine housing of each engine and the engine is movable relative to the canard.

In accordance with yet another aspect of the present invention a plurality of engines are arranged on each wing and/or on each canard and the engine housing of each engine arranged on each wing/each canard forms a flap movable relative to the wing and/or the canard. During operation of the aircraft, the engine(s) moves and the movement of the flap(s), i.e. the engine inlet upper lip, is an additional means to remove ice from the engine bulkheads. The principle applied relates to the rapid change in flap angle dislodging the ice through induced vibrations.

In accordance with yet another aspect of the present invention, the ice protection system is also provided on an engine inlet upper lip. This leads to good overall ice protection on the aircraft.

In accordance with yet another aspect of the present invention, a plurality of engines are arranged on the trailing edge of each airfoil and a parting strip is arranged on each engine bulkhead. Due to the permanently heated parting strip, the formation of ice at the engine bulkhead is prevented and each engine bulkhead is permanently kept free from ice in icing conditions.

In accordance with yet another aspect of the present invention each de-icing strip is divided into at least 1 - 20 de-icing segments, preferably at least into 2 - 6 de-icing segments. As mentioned before, each de-icing segment can be a separate, short de-icing strip. In this case, a plurality of short de-icing strips is arranged one after the other along the leading edge of the airfoil, forming one long de-icing strip. Each de-icing segment and therefore each a separate, short de-icing strip can be heated individually. This allows an exact determination of the size of the shed ice pieces.

In accordance with yet another aspect of the present invention, the time period for heating each de-icing segment in the heating cycle lies in a range from 1 to 60 seconds, preferably 6-36, more preferably 6-18 seconds. The time period for heating the segments, preferably the individual, short de-icing strips can be different for the individual segments, preferably the individual, short de-icing strips. The sum of the time periods for heating each segment/ each individual, short de-icing strips is the cycling rate. The cycling rate allows to determine the thickness of the shed ice pieces.

In accordance with yet another aspect of the present invention, more than one de-icing segments is heated at the same time. The number of de-icing segments on the first wing corresponds to the number of de-icing segments on the second wing. The number of de-icing segments on the first canard corresponds to the number of de-icing segments on the second canard. De-icing segments arranged on corresponding positions on the wings and on the canards respectively are preferably heated at the same time. As mentioned before, each de-icing segment can be a separate, short de-icing strip. In this case, a plurality of short de-icing strips is arranged one after the other along the leading edge of the airfoil, forming one long de-icing strip. Each de-icing segment and therefore each a separate, short de-icing strip can be heated individually as described above.

In accordance with yet another aspect of the present invention, a method of removing ice formations from an airfoil of an aircraft wherein at least one engine is arranged on the trailing edge of the airfoil comprises the following steps: removing the ice formations on the airfoil by breaking the ice formations into pieces using an ice protection system; controlling the size of the removed ice pieces to stay below a predetermined maximum value with the ice protection system.

In accordance with yet another aspect of the present invention, a method of removing ice formations from an airfoil of an aircraft comprises the following steps: keeping the stagnation zone of the airfoil free from ice; dividing the airfoil into segments in a spanwise direction of the airfoil and sequentially removing the ice formations from the segments. The ice formations on the airfoil are removed from the airfoil and broken into ice pieces, wherein the size of the removed ice pieces is adjusted in a chordwise direction, in a spanwise direction and in a thickness direction. This allows an exact control of the size of the shed ice pieces.

In accordance with yet another aspect of the present invention, a method of removing ice formations from an airfoil of an aircraft comprises the following steps: permanently heating the air stagnation zone of the airfoil by a parting strip to keep the air stagnation zone free from ice; intermittently heating the segments in the spanwise direction of the airfoil in a predetermined sequence with at least on de-icing strip which is divided into the individual de-icing segments to split up and remove the ice formations in ice pieces.

### BRIEF DESCRIPTION OF THE DRAWINGS

Fig. 1 is a partial front view of an aircraft (eVTOL) comprising a pair of canards and a pair of wings, each having engines arranged on the trailing edge thereof, provided with an ice protection system;
Fig. 2 is a side view of a first embodiment of a canard and an engine arranged thereon of the aircraft of Fig. 1 provided with a first embodiment of the ice protection system;
Fig. 3 is a side view of a first embodiment of a wing and an engine arranged thereon of the aircraft of Fig. 1 provided with a first embodiment of the ice protection system;
Fig. 4 is side view of a second embodiment of a canard and an engine arranged thereon of the aircraft of Fig. 1 provided with a second embodiment of the ice protection system;
Fig. 5 is side view of a second embodiment of the a wing and an engine arranged thereon of the aircraft of Fig. 1 provided with a second embodiment of the ice protection system; and Fig. 6 is a top view of the aircraft with the ice protection system.

### DETAILED DESCRIPTION OF THE INVENTION

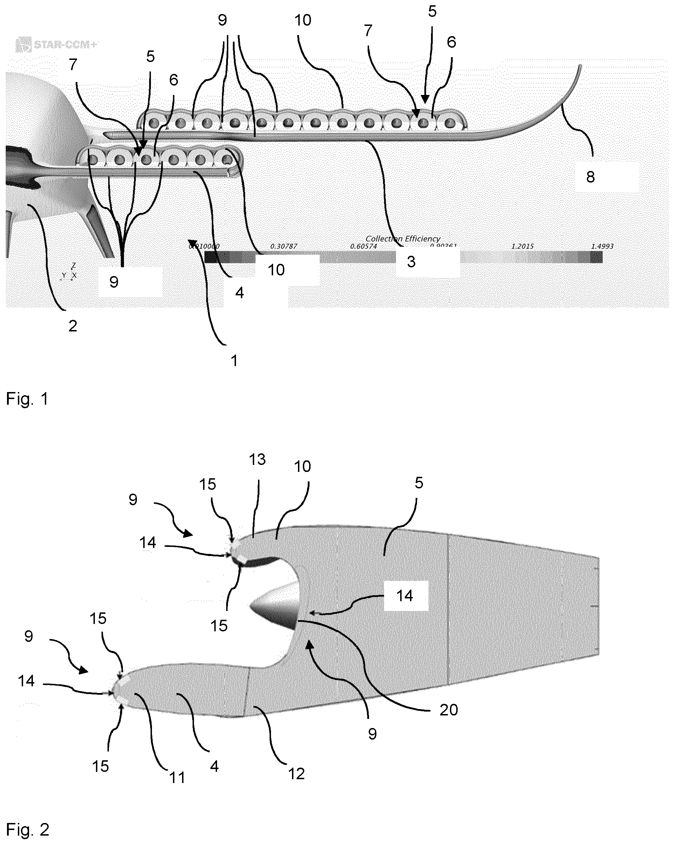

Fig. 1 shows a partial side view of an aircraft 1. The aircraft 1 is an electric take-off and landing aircraft (eVTOL). The aircraft 1 thus moves in a basically vertical direction during takeoff and landing and in basically horizontal direction during transition and forward flight. The aircraft 1 comprises an aircraft body 2, a pair of wings 3 arranged at or near the rear end of the aircraft body 2 and a pair of canards 4 arranged at or near the front end of the aircraft body 2. In Fig. 1, only the left half of the aircraft 1 is shown, with the left half of the aircraft body 2, one wing 3 arranged on the left side of the aircraft body 2 and one canard 4 arranged on the left side of the aircraft body 2. The right half of the aircraft 1 is formed symmetrical to the left half.

In order to be able to perform the desired movement, i.e. a basically vertical movement during take-off and landing and a basically horizontal movement in transition flight, the aircraft 1 is provided with 36 electric engines 5. The exact number of engines is not mandatory and can change depending on specific requirements, e.g. aircraft size, etc. Twelve engines 5 are arranged on the trailing edge of the wing 3. The wing 3 is further provided with a winglet 8. The winglet 8 is arranged at the tip of the wing 3 adjacent to the engines 5. On the trailing edge of the canard 4 six engines 5 are arranged. Each engine 5 comprises an engine housing 6 and an engine inlet 7. Each engine 5 is movable relative to the wing 3 and to the canard 4, respectively. Each engine 5 comprises an engine inlet upper lip that can also be regarded as a flap 10. Each flap 10 is therefore movable relative to the respective wing 3 or canard 4. In total, the aircraft 1 shown in Fig. 1 therefore has 36 flaps at the trailing edge of the canard 4 and the wing 3.

During the vertical flight of the aircraft 1, the engines 5 are arranged in a general vertical position so that they point downwards. For transition flight, the engines 5 are moved from the vertical position into a more or less horizontal position and can be operated in any position between the vertical and the horizontal position. The engines 5 are therefore rotatable around an angle of approximately 90° relative to the wing 3 and the canard 4 respectively. The engines 5 on each wing 3 are arranged adjacent to each other. The engines 5 on each canard 4 are also arranged adjacent to each other.

In order to operate in flight into known icing conditions, the aircraft 1 is provided with an ice protection system (IPS) 9. The ice protection system 9 preferably protects all areas of the aircraft 1, which are prone to ice formation during icing conditions including engines without gaps. Fig. 1 shows the regions of droplet impingement and ice formation but not all of the shown regions need to be protected for FIKI certification. In one embodiment, the landing gear and radome are not considered for the IPS. In the described embodiment, the ice protection system 9 is arranged to cover the leading edge of the wing 3, the leading edge of the canard 4 and the leading edge of the engine housing 6 of each engine 5, in particular the flap 10 and the engine bulkhead of each engine 5. The ice protection system 9 is an electrothermal system. The overall mechanism of the ice protecting system 9 is de-icing. This means, that ice is allowed to form on the leading edges of the wings 3, the canards 4 and the flaps 10 and is removed before it reaches a critical size, i.e. a size that would cause damage to the engines.

The ice protection system 9 is arranged so that it covers the 50µm MVD droplet impingement extent on all leading edges as mentioned above. As the engines 5 are arranged on the trailing edge of the wing 3 and at the trailing edge of the canard 4 ice pieces removed with the ice protection system 9 can be ingested by the engines 5. Special care has to be taken that these ice pieces do not damage the engines 5.

The ice protection system 9 is therefore an electro-thermal system coupled with segments. This allows controlling the dimensions of the shed ice pieces in a spanwise direction and in a chordwise direction. Heating of the electro-thermal system is carried out in a heating cycle. The cycling rate allows control of the thickness of the shed ice pieces. The size of the shed ice pieces is therefore exactly controlled in a spanwise direction, a chordwise direction and in a thickness direction and leads to the best overall trade-off between engine robustness sizing, power consumption and degraded performance of the aircraft 1.

In the following, the ice protection system 9 is described in more detail with the aid of Fig. 2 to 5. Fig. 2 shows a side view of a first embodiment of the canard 4 with the engine 5 arranged at the trailing edge 12 of the canard 4. The leading edge 11 of the canard 4 and the leading edge 13 of the flap 10 are provided with a first embodiment of the ice protection system 9. In the first embodiment shown in Fig. 2, the ice protection system 9 on the leading edge of the canard 4 comprises an ice shedding device with three heating strips arranged at the leading edge 11 of the canard 4. The heating strips extend in the spanwise direction of the canard 4. One of the heating strips is a parting strip 14 which is arranged at or near the stagnation point of the canard 4. The parting strip 14 is permanently heated in icing conditions and functions in a running wet mode to prevent the formation of any ice around the stagnation point of the leading edge 11 of the canard 4. The other two heating strips are de-icing strips 15. The de-icing strips 15 are arranged adjacent to the parting strip 14, one on each side of the parting strip 14, regarded in the streamwise direction/chordwise direction of the canard 4. The parting strip 14 and the de-icing strips 15 extend in parallel to each other along a leading edge 11 of the canard 4.

The ice protection system 9 on the leading edge 13 of the flap 10 also comprises an ice shedding device with three heating strips arranged at the leading edge 13 of the flap 10. Again, one of the heating strips is a parting strip 14 which is arranged at or near the stagnation point of the flap 10. Furthermore, a parting strip 14 is arranged at each engine bulkhead 20. The parting strips 14 are permanently heated in icing conditions and function in a running wet mode to prevent the formation of any ice around the stagnation point of the leading edge 13 of the flap 10 and at the engine bulkhead 20. The other two heating strips at the leading edge 13 of the flap 10 are de-icing strips 15. The de-icing strips 15 are arranged adjacent to the parting strip 14, on each side of the parting strip 14, regarded in the streamwise direction. The parting strip 14 and the de-icing strips 15 extend in parallel to each other along a leading edge 13 of the flap 10.

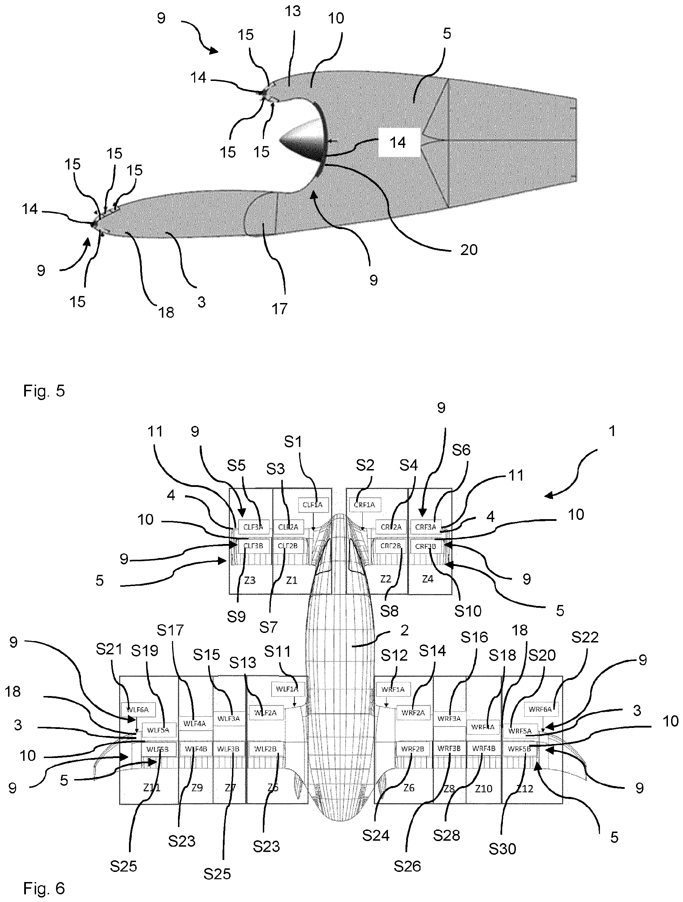

In icing conditions, all de-icing strips 15, that is the de-icing strips 15 on the canard 4 and the de-icing strips 15 on the flap 10 are heated intermittently during a heating cycle of the ice protection system 9 to melt a thin layer of ice at the substrate bond interface. The aerodynamic forces consequently remove the ice pieces. The de-icing strips 15 generally have a higher power density in comparison to the parting strips 14 to provide more rapid ice melting capability in the deiced regions. The heating cycle of the ice protection system 9 will be described in more detail below with reference to Fig. 6.

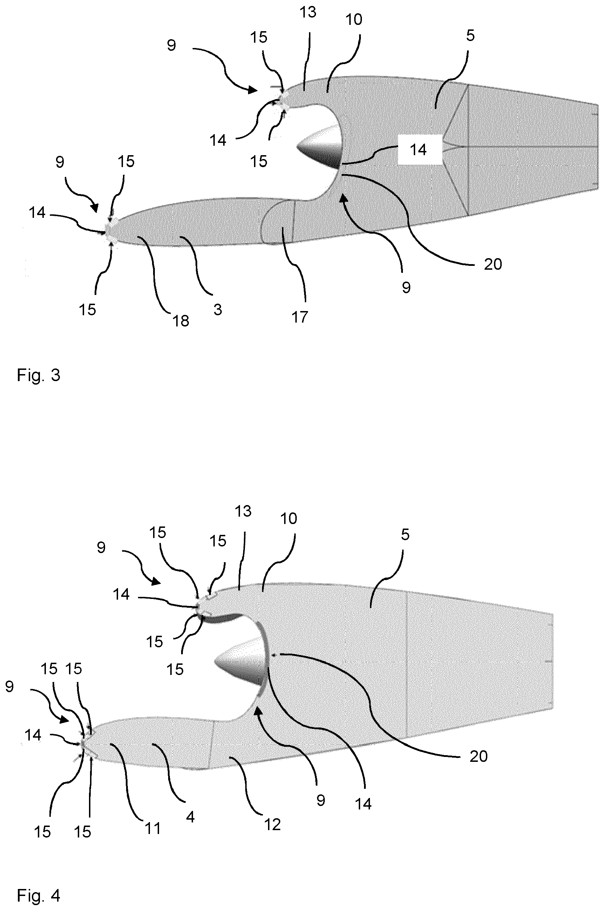

Fig. 3 shows a side view of a first embodiment of the wing 3 with an engine 5 arranged at the trailing edge 17 of the wing 3. The leading edge 18 of the wing 3 and the leading edge 13 of the flap 10 of the engine 5 are provided with the ice protection system 9. In the first embodiment shown in Fig. 3, the ice protection system 9 on the leading edge of the wing 3 comprises an ice shedding device with three heating strips arranged at the leading edge 17 of the wing 3. The heating strips extend in the spanwise direction of the wing 3. One of the heating strips is a parting strip 14 which is arranged at or near the stagnation point of the wing 3. The parting strip 14 is permanently heated in icing conditions and functions in a running wet mode to prevent the formation of any ice around the stagnation point of the leading edge 18 of the wing 3. The other two heating strips are de-icing strips 15. The de-icing strips 15 are arranged adjacent to parting strip 14, one on each side of the parting strip 14, regarded in the streamwise direction/chordwise direction of the wing 3.

The ice protection system 9 on the leading edge of the flap 10 of the engine 5 also comprises an ice shedding device with three heating strips arranged at the leading edge 13 of the flap 10. One of the heating strips is a parting strip 14 which is arranged at or near the stagnation point of the flap 10. Furthermore, a parting strip 14 is arranged at each engine bulkhead 20. The parting strips 14 are permanently heated in icing conditions and function in a running wet mode to prevent the formation of any ice around the stagnation point of the leading edge 13 of the flap 10 and at the engine bulkhead 20. The other two heating strips at the leading edge 13 of the flap 10 are de-icing strips 15. The de-icing strips 15 are arranged on each side of the parting strip 14 regarded in the streamwise direction. The parting strip 14 and the de-icing strips 15 extend in parallel to each other along a leading edge 13 of the flap 10. In icing conditions, all de-icing strips 15 are heated intermittently during a heating cycle of the ice protection system 9 to melt a thin layer of ice at the substrate bond interface. The aerodynamic forces consequently remove the ice pieces. The de-icing strips 15 generally have a higher power density in comparison to the parting strips to provide more rapid ice melting capability in the deiced regions. The heating cycle of the ice protection system 9 will be described in more detail below with reference to Fig. 6. In all embodiments, the de-icing strips 15 and the parting strip 14 extend in parallel to each other. It is also possible to provide more than one de-icing strip 15 on one or both sides of the parting strip 14 in a streamwise direction/chordwise direction of the canard 4/wing 3.

Fig. 4 shows a side view of a second embodiment of the ice protection system on the canard 4 with the engine 5 arranged at the trailing edge 12 of the canard 4. Unless otherwise specified herein, components of the second embodiment with the same reference numbers as in the first embodiment generally operate in the same manner. The second embodiment corresponds basically to the first embodiment and only the differences between the first embodiment and the second embodiment are described in the following. In the embodiment shown in Fig. 4, the ice protection system 9 on the leading edge of the canard 4 comprises an ice shedding device with five heating strips arranged at the leading edge 11 of the canard 4. The heating strips extend in the spanwise direction of the canard 4. Again, one of the heating strips is a parting strip 14 which is arranged at or near the stagnation point of the canard 4. The other four heating strips are de-icing strips 15 which are arranged at the leading edge 11 of the canard 4. Two de-icing strips 15 are arranged on each side of the parting strip 14 regarded in the streamwise direction/chordwise direction of the canard 4, so that two de-icing strips 15 are arranged on the lower side of the canard 4 and two de-icing strips 15 are arranged on the upper side of the canard 4 directly adjacent to the parting strip 14. The two de-icing strips 15 arranged on the same side of the parting strip 14 are not heated at the same time, i.e. the two de-icing strips 15 on the upper side of the canard 4 are not heated at the same time and the two de-icing strips 15 on the lower side of the flap are not heated at the same time to avoid that ice from both de-icing strips would impact the engine. However, one de-icing strip 15 on the upper side of the canard 4 and one de-icing strip 15 on the lower side of the canard 5 can be heated at the same time. The ice that is then removed is not entering into the engine 5 from both strips. Due to the arrangement of two or more de-icing strips 15 on the same side of the parting strip 14 runback icing after the removal of ice from the preceding de-icing strip 15 can be avoided.

In the second embodiment, the ice protection system 9 on the leading edge 13 of the flap 10 also comprises an ice shedding device with five heating strips arranged at the leading edge 13 of the flap 10. One of the heating strips is a parting strip 14 which is arranged at or near the stagnation point of the flap 10. The other four heating strips are de-icing strips 15. Furthermore, a parting strip 14 is arranged at each engine bulkhead. As on the canard 4, two de-icing strips 15 are arranged on each side of the parting strip 14 regarded in the streamwise direction. Due to the arrangement of two or more de-icing strips 15 on the same side of the parting strip 14 runback icing after the removal of ice from the preceding de-icing strip 15 can be avoided.

Fig. 5 shows a side view of a second embodiment of the ice protection system on the wing 3 with an engine 5 arranged at the trailing edge 17 of the wing 3. Unless otherwise specified herein, components of the second embodiment with the same reference numbers as in the first embodiment generally operate in the same manner. The second embodiment corresponds basically to the first embodiment and only the differences between the first embodiment and the second embodiment are described herein. In the embodiment shown in Fig. 5, the ice protection system 9 on the leading edge 18 of the wing 3 comprises an ice shedding device with five heating strips arranged at the leading edge 18 of the wing 3. The heating strips extend in the spanwise direction of the wing 3. One of the heating strips is a parting strip 14 which is arranged at or near the stagnation point of the wing 3. The other four heating strips are de-icing strips 15. On the upper side of the wing 3 three de-icing strips 15 are arranged adjacent to the parting strip 14 in the streamwise direction/chordwise direction of the wing 3. The de-icing strips 15 arranged on the upper side of the wing 3 are heated one at a time to avoid that multiple ice pieces would impact the engine at one time. On the lower side of the wing 3, one de-icing strip 15 is arranged adjacent to the parting strip 14 regarded in the streamwise direction.

The ice protection system 9 on the leading edge of the flap 10 comprises an ice shedding device with four heating strips arranged at the leading edge 13 of the flap 10. One of the heating strips is a parting strip 14 which is arranged at or near the stagnation point of the flap 10. The other three heating strips are de-icing strips 15. One de-icing strip is arranged on the upper side of the flap 10 adjacent to the parting strip 14, the other two de-icing strips 15 are arranged on the lower side of the flap 10 adjacent to the parting strip 14 in the streamwise direction. Only one of these de-icing strips 15 arranged on the lower side of the flap 10 is heated at the same time to avoid that multiple ice pieces would impact the engine at one time. Furthermore, a parting strip 14 is arranged at each engine bulkhead.

Fig. 6 shows a top view of the aircraft 1 with the ice protection system 9 arranged thereon. As described above, the aircraft 1 comprises an aircraft body 2, a pair of wings 3 and a pair of canards 4. The engines 5 are arranged on the trailing edge of the canards 4 and on the trailing edge of the wings 3. The engines 5 arranged on the canards 4 are movable relative to the canards 4. The engines 5 arranged on the wings 3 are movable relative to the wings 3.

As described above, the leading edge of each canard 4, the leading edges of the flaps 10 (engine inlet upper lips) on each canard 4, the leading edge of each wing 3, the leading edge of the flaps 10 on each wing 3 and all engine bulkheads 20 are provided with the ice protection system 9. The ice protection system 9 covers the spanwise area of the wings 3 and of the canards 4 and the engine housings of the engines 5 (flaps) where ice formation occurs without gaps. The parting strips 14 and the de-icing strips 15 extend in parallel to each other on the leading edges of the wings 3, of the canards 4 and on the engine housing. The ice protection system 9 is activated when the aircraft is operated in icing conditions. The ice protection system 9 can either be manually activated or can be automatically activated for example depending on the detection result of an ice detection sensor. Operation of the ice protection system is controlled with an ice protection system controller.

The energy supply of the engines 5 also supplies energy to the ice protection system 9 to heat the heating strips, i.e. the parting strips and the de-icing strips. The energy supply for the ice protection system 9 is divided into twelve energy supply zones Z1, Z2, Z3, Z4, Z5, Z6, Z7, Z8, Z9, Z10, Z11, Z12. In the embodiment shown in Fig. 6, the canards 4 are divided into four energy supply zones Z1 - Z4, two energy supply zones on each canard 4 with the engines 5 attached thereto.

On the wings 3 with the engines 5 arranged thereon, the ice protection system 9 comprises eight energy supply zones, Z5 - Z12, four energy supply zones on each wing 3. The number of energy supply zones of the ice protection system can vary and depends inter alia on the size of the aircraft. In each zone Z1 - Z12 a common high-voltage DC power supply is provided from the energy storage system to an ice protection system power control and monitoring via a flap power distribution unit.

The de-icing strips 15 are segmented into de-icing segments along the leading edge 11 of the canards 4, the leading 18 of the wings 5 and the leading edges 13 of the flaps 10. This is symbolized by the boxes S1-S30 on the leading edge of the canard 4, the wing 3 and the flaps 10. In the embodiment shown in Fig. 6, each box S1-S30 stands for an arrangement of one individual de-icing segment. Each de-icing segment of the de-icing strips 15 is an individual, short de-icing strip in itself. Therefore, a plurality of short de-icing strips are arranged one after the other along the leading edge 11 of the canards 4, the leading 18 of the wings 5 and the leading edges 13 of the flaps 10.

Each box S1-S30 stands for a combination of parting strips 14 and de-icing strips 15 as described above in regard to Fig. 2-5. In each box, the parting strips 14 and de-icing strips 15 are arranged in parallel to each other in a chordwise direction of the wing 3, canard 4 and flap 10, and extend along the leading edge of the leading edge 11 of the canards 4, the leading 18 of the wings 3 and the leading edges 13 of the flaps 10 in a spanwise direction as shown in Fig. 2 to 5.

The parting strips 14 are permanently heated and keep an area around the stagnation point of the corresponding leading edge free from ice. In the embodiment shown in Fig. 6, one parting strip 14 is arranged in each segment or box S1-S30. Therefore, a plurality of permanently heated short parting strips are arranged one after the other along the leading edge 11 of the canards 4, the leading 18 of the wings 3 and the leading edges 13 of the flaps 10 to form one long parting strip that keeps the air stagnation zone of the wings 3, the canards 4 and the flaps 10 free from ice.

As described above, the de-icing strips 15 are segmented in the spanwise direction of the canards 4, the wings 3 and the flaps 10 as shown by the boxes S1-S30. The de-icing strips on the canards 4 are divided into six segments S1 to S6, three segments on each canard 4. The de-icing strips on the flaps 10 of the canards 4 are divided into four segments S5-S10, two segments on each side. The de-icing strips on the wings 3 are divided into twelve segments S11 - S22, six segments on each wing 3 and the de-icing strips on the flaps 10 of the wings 3 are divided into eight segments S23 - S30, four segments on each side. Each de-icing segment of the de-icing strips 15 is an individual, short de-icing strip in itself. This allows simple control off how and when to heat an individual de-icing segment. The parting strip and the de-icing strip are of the same length for one segment or box S1-S30. This segregates one segment from another in case of failure.

The individual segments of the de-icing strips 15, that is the individual short de-icing strips, are sequentially heated for a predetermined time period, the heating time. The length of the heating time can be controlled by the ice protection system 9. When one of the de-icing strip segments is heated, then the ice layer at the substrate bond interface melts and the ice formation in this segment is removed by aerodynamic forces. Therefore, the segmentation of the de-icing strips into individual short de-icing strips leads to control of the dimension of the shed ice pieces in the spanwise direction. The arrangement of two or more de-icing strips adjacent to each other on the wing, the canard or the flap in the streamwise direction allows controlling the dimension of the shed ice pieces in the chordwise direction. The total heating time/cycle time allows controlling the thickness of the ice piece. Therefore, the size of the ice pieces shed from the leading edge of the canard, wing and flap can be exactly controlled. This ensures that the shed ice pieces do not damage the engines at the trailing edge.

The following table 1 shows an example for a heating cycle of the ice protection system 9:

**Table 1**

| Cycle number | Time period (s) | Segments Canard Leading edge | Segments Canard Flap Leading edge | Segments Wing Leading edge | Segments Wing Flap Leading edge | Energy Supply Zone involved |
|---|---|---|---|---|---|---|
| 1 | 0-18 | S1, S2 | | S11, S12 | | Z1, Z2, Z5, Z6 |
| 2 | 18-54 | S3, S4 | S7, S8 | S13, S14 | S23, S24 | Z1, Z2, Z5, Z6 |
| 3 | 54-90 | S5, S6 | S9, S10 | S15, S16 | S25, S26 | Z3, Z4, Z7, Z8 |
| 4 | 90-126 | | | S17, S18 | S27, S28 | Z9, Z10 |
| 5 | 126-162 | | | S19, S20 | S29, S30 | Z11, Z12 |
| 6 | 162-180 | | | S21, S22 | | Z11, Z12 |

Operation of the ice protection system 9 is described with the aid of table 1. This table corresponds to the embodiment shown in Fig. 4 and 5 in terms of the arrangements of the heating strips, i.e. the parting strip and the de-icing strips. At the start of a heating cycle of the ice protection system 9 (cycle number 1), the inner energy supply zones Z1, Z2 on the canards 4 and the two innermost energy supply zones Z5, Z6 on the wings 3 are activated and provide segments S1 and S2 on the leading edge of the canards 4 and segments S11 and S12 on the wings 3 with energy, i.e. power, so that the de-icing strips in these segments are heated. The time period for heating these segments S1, S2, S11, S12 is 18 seconds. This leads to a de-icing in the corresponding segments of the canards 4, wings 3 and flaps 10.

In the next step (cycle number 2) the inner energy supply zones Z1, Z2 on the canards 4 and the innermost energy supply zones Z5, Z6 on the wings 3 are still activated but now provide segments S3 and S4 on the canards 4, segments S7 and S8 on the flaps 10 of the canards 4, segments S13 and S14 on the wings 3 and segments S23 and S24 of the flaps 10 of the wings 3 with energy, so that the de-icing strips in these segments are heated. The time period for heating these segments is 36 seconds. This leads to a de-icing in the corresponding segments of the canards 4, wings 3 and flaps 10.

In the next step (cycle number 3) the outer energy supply zones Z3, Z4 on the canards 4 and the two energy supply zones Z7, Z8 on the wings 3 are activated and provide segments S5 and S6 on the canards 4, segments S9 and S10 on the flaps 10 of the canards 4, segments S15 and S16 on the wings 3 and segments S25 and S26 of the flaps 10 of the wings 3 with energy, so that the de-icing strips in these segments are heated. The time period for heating these segments is 36 seconds. This leads to a de-icing in the corresponding segments of the canards 4, wings 3 and flaps 10.

In the next step (cycle number 4) the two energy supply zones Z9, Z10 on each wing 3 are activated and provide segments S17 and S18 on the wings 3 and segments S27 and S28 of the flaps 10 of the wings 3 with energy, so that the de-icing strips in these segments are heated. The time period for heating these segments is 36 seconds. This leads to a de-icing in the corresponding segments of the wings 3 and flaps 10. In this step, there is no de-icing of the canard and the flaps of the canard.

In the next step (cycle number 5) the two energy supply zones Z11, Z12 on each wing 3 are activated and provide segments S19 and S20 on the wings 3 and segments S29 and S30 of the flaps of the wings 3 with energy, so that the de-icing strips in these segments are heated. The time period for heating these segments is 36 seconds. This leads to a de-icing in the corresponding segments of the wings 3 and flaps 10. In this step, there is no de-icing of the canard and the flaps of the canard.

In the last step (cycle number 6) of the heating cycle the two energy supply zones Z11, Z12 on each wing 3 are still activated and that provide segments S21 and S22 on the wings 3 with energy, so that the de-icing strips in these segments are heated. The time period for heating these segments is 18 seconds. This leads to a de-icing in the corresponding segments of the wings 3. In this step, there is no de-icing of the canard and the flaps of the canard and of the flaps of the wings.

All parting strips are permanently heated during the heating cycle to keep the air stagnation zone free from ice.

This leads to total cycle time of 180 seconds. In the non-heated segments, ice formations will rebuild and are shed off in the next heating cycle.

This description for the heating cycle is only an example and the number of energy supply zones, of de-icing segments, on the time period for heating and the total cycle time can be changed if necessary.

## Claims

1. An aircraft comprising at least one airfoil and at least one engine arranged on the trailing edge of the airfoil, the engine comprising an engine housing and an engine inlet, **characterized in that** an ice protection system is provided on at least one region of the airfoil and/or the engine housing which is/are arranged upstream of the engine inlet, wherein the ice protection system comprises an ice shedding device adapted for shedding ice formations formed on the airfoil and/or the engine housing into ice pieces and wherein the ice shedding device is adapted to control the size of the shed ice pieces to stay below a predetermined maximum size.

2. The aircraft according to claim 1, **characterized in that** the ice protection system is adapted to control the size of the shed ice pieces in a spanwise direction, in a chordwise direction and in a thickness direction.

3. The aircraft according to claim 1 or 2, **characterized in that** the ice shedding device of the ice protection system comprises at least two heating strips extending in the spanwise direction of the airfoil, wherein at least one of the heating strips is a permanently heated parting strip that is arranged in an area around a stagnation point of the airfoil leading edge, and wherein at least one of the heating strips is a de-icing strip that is arranged adjacent to the parting strip in the chordwise direction of the airfoil, is divided into de-icing segments along the spanwise direction of the airfoil, and wherein the de-icing segments of the de-icing strip are adapted to be sequentially heated in a heating cycle.

4. The aircraft according to claim 3, **characterized in that** the segments of the at least one de-icing strip are adapted to be heated in a predetermined sequence.

5. The aircraft according to claim 3 or 4, **characterized in that** the power density of the at least one de-icing strip is higher than the power density of the at least one parting strip.

6. The aircraft according to at least one of claims 3 to 5, **characterized in that** at least two of the heating strips are de-icing strips and at least one de-icing strip is arranged adjacent to each side of the parting strip in the chordwise direction of the airfoil, preferably more than one de-icing strip is arranged adjacent to the parting strip in the chordwise direction of the airfoil on at least on one side of the parting strip.

7. The aircraft according to at least one of the preceding claims, **characterized in that** the aircraft is an electric vertical take-off and landing (eVTOL) aircraft.

8. The aircraft according to at least one of the preceding claims, **characterized in that** the aircraft comprises two airfoils in the form of a pair of wings and two further airfoils in the form of a pair of canards, wherein at least one engine is arranged on the trailing edge of each wing, the ice protection system is provided on a leading edge of each wing and on the leading edge of the engine housing of each engine, and each engine is movable relative to each wing and wherein at least one engine is arranged on the trailing edge of each canard, the ice protection system is provided on a leading edge of each canard and on the leading edge of the engine of the engine housing of each engine and each engine is movable relative to each canard.

9. Aircraft according to claim 8, **characterized in that** a plurality of engines are arranged on each wing and the engine housing of each engine arranged on a wing forms a flap movable relative to the wing, and **in that** a plurality of engines are arranged on each canard and the engine housing of each engine arranged on a canard form a flap movable relative to the canard.

10. The aircraft according to at least one of the preceding claims, **characterized in that** a plurality of engines are arranged on the trailing edge of each airfoil and a parting strip is arranged on each engine bulkhead.

11. The aircraft according to at least one of claims 3 to 10, **characterized in that** each de-icing strip comprises at least 1 - 20 de-icing segments, preferably at least 2 - 6 de-icing segments.

12. The aircraft according to at least one of claims 3 to 11, **characterized in that** a time period for heating each de-icing segment in one heating cycle lies in a range from 1 to 60 seconds, preferably 6-36 seconds, more preferable 6-18 seconds.

13. The aircraft according to at least one of claim 3 to 12, **characterized in that** more than one de-icing segment is heated at the same time.

14. Method of removing ice formations from an airfoil of an aircraft wherein at least one engine is arranged on the trailing edge of the airfoil, comprising the following steps:
- removing the ice formations on the airfoil by breaking the ice formations into pieces using an ice protection system;
- controlling the size of the removed ice pieces to stay below a predetermined maximum value with the ice protection system.

15. The method of removing ice formations from an airfoil of an aircraft according to claim 18, comprising the following steps: :
- keeping a stagnation zone at the leading edge of the airfoil free from ice;
- dividing the airfoil into segments in a spanwise direction of the airfoil and sequentially removing the ice formations from the segments.
